# EUROPÄISCHE PATENTSCHRIFT

(11) **EP 1 024 919 B1**
(45) Veröffentlichungstag und Bekanntmachung des Hinweises auf die Patenterteilung: **12.11.2003**
(21) Anmeldenummer: 99952281.6
(22) Anmeldetag: 04.08.1999
(51) Int. Cl.: B23K 26/00

(54) **VERFAHREN ZUM BEARBEITEN, INSBESONDERE VERLÖTEN, EINES BAUTEILES ODER EINER BAUTEILANORDNUNG MITTELS ELEKTROMAGNETISCHER STRAHLUNG**
METHOD OF TREATING A WORKPIECE OR A WORKPIECE ASSEMBLY IN PARTICULAR FOR BRAZING USING AN ELECTROMAGNETIC BEAM
PROCEDE POUR USINER UN ELEMENT OU UNE STRUCTURE D'ELEMENT A L'AIDE D'UN RAYONNEMENT ELECTROMAGNETIQUE ET POUR JOINTER, NOTAMMENT BRASER

(30) Priorität: 28.08.1998 DE 19839343
(43) Veröffentlichungstag der Anmeldung: 09.08.2000
(73) Patentinhaber: Patent-Treuhand-Gesellschaft für elektrische Glühlampen mbH, 81543 München (DE)
(72) Erfinder: HESENER, Hanno, D-30161 Hannover (DE)
(86) Internationale Anmeldenummer: DE9902423
(87) Internationale Veröffentlichungsnummer: WO00012256

(56) Entgegenhaltungen:
- US-A- 4 839 497
- US-A- 5 272 309

## Beschreibung

Die Erfindung betrifft ein Verfahren zum Bearbeiten eines Bauteiles oder einer Bauteilanordnung mittels elektromagnetischer Strahlung, wobei das Bauteil oder die Bauteilanordnung aus wenigstens zwei in Einstrahlrichtung der elektromagnetischen Strahlung hintereinander angeordneten Werkstoffen besteht.

Es ist allgemein bekannt, zum Fügen von Bauteilen elektromagnetische Strahlung, insbesondere Laserstrahlung, zu verwenden. Durch DE 195 20 336 A1 ist ein Verfahren zum Auflöten von elektronischen Bauelementen auf einen Schaltungsträger bekannt, bei dem Laserstrahlung zum Erwärmen und Schmelzen des Lotes eingesetzt wird.

Ähnliche Verfahren sind auch durch DE 40 17 286 A1, DE 40 38 765 A1 und DE 195 29 388 A1 bekannt.
Aus der US-A 4 839 497 ist ein Verfahren zum Bearbeiten eines Bauteils oder einer Bauteilanordnung mittels elektromagnetischer Strahlung bekannt, worauf der Oberbegriff des Anspruchs 1 basiert. Dabei besteht das Bauteil aus wenigstens zwei in Einstrahlrichtung der Strahlung hintereinander angeordneten Werkstoffen wobei Strahlung einer ersten Wellenlänge und Laserstrahlung einer zweiten Wellenlänge auf das Bauteil gerichtet wird. Die beiden Strahlungen werden von einem ersten Werkstoff, nämlich Kupfer, des Bauteils schwächer absorbiert als von einem in Einstrahlrichtung hinter dem ersten Werkstoff liegenden Bauteil, nämlich einem Polymer. Dagegen wird die Strahlung der zweiten Wellenlänge von dem ersten Werkstoff stärker absorbiert als vom zweiten Werkstoff. Auch eine entsprechende Vorrichtung ist angegeben.
Aus der US-A 5 272 309 ist eine Vorrichtung bekannt, die zum Fügen geeignet ist und die eine Halterung und ein Mittel zum Erzeugen zweier elektromagnetischer Strahlungen enthält.

Es ist ferner bekannt, Laserstrahlung zum Verlöten von Bauteilen aus Keramikwerkstoff mit Bauteilen aus Metall zu verwenden. Hierbei ist das Metall in Einstrahlrichtung hinter dem Keramikwerkstoff angeordnet, wobei sich zwischen beiden Werkstoffen ein Glaslot befindet. Die Laserstrahlung wird auf den Keramikwerkstoff gerichtet und wird von diesem zum Teil absorbiert und zum Teil zu dem in Einstrahlrichtung hinter dem Keramikwerkstoff angeordneten Glaslot und dem in Einstrahlrichtung hinter dem Glaslot angeordneten Metall durchgelassen. Die Absorption der Laserstrahlung in dem Keramikwerkstoff und in dem Metall führt zu einer Erwärmung dieser Werkstoffe, aufgrund derer das Glaslot ebenfalls erwärmt wird und schmilzt. Ist das Glaslot in der gewünschten Weise geschmolzen, so kann die Laserstrahlung abgeschaltet werden. Beim anschließenden Erkalten des Glaslotes verbindet dieses den Keramikwerkstoff mit dem Metall.

Ein Nachteil dieses bekannten Verfahrens besteht darin, daß eine hohe Intensität der Laserstrahlung erforderlich ist, um sicherzustellen, daß ein genügender Anteil der Laserstrahlung zu dem Metall durchgelassen wird, um von diesem absorbiert zu werden. Hierbei tritt ein hoher Temperaturgradient auf, der zu thermischen Spannungen und häufig zu einer Rißbildung in dem Keramikkörper führt, wodurch das Bauteil zerstört wird. Das bekannte Verfahren hat sich aus diesem Grund als nur eingeschränkt brauchbar erwiesen.

Der Erfindung liegt die Aufgabe zugrunde, ein Verfahren zum Bearbeiten eines Bauteiles oder einer Bauteilanordnung mittels elektromagnetischer Strahlung anzugeben, das auch zum Fügen von Bauteilen geeignet ist und bei dem eine Beschädigung der Bauteile zuverlässig vermieden ist.

Diese Aufgabe wird durch die im Anspruch 1 angegebene Lehre gelöst.

Der Grundgedanke der erfindungsgemäßen Lehre besteht darin, zum Bearbeiten von Bauteilen oder Bauteilanordnungen, die aus unterschiedlichen Werkstoffen bestehen, elektromagnetische Strahlung unterschiedlicher Wellenlängen zu verwenden, wobei wenigstens einem Teil der unterschiedlichen Werkstoffe des Bauteiles bzw. der Bauteilanordnung elektromagnetische Strahlung einer Wellenlänge zugeordnet ist, die von dem betreffenden Werkstoff stärker absorbiert wird als von den übrigen Werkstoffen. Auf diese Weise ist eine selektive Bearbeitung der unterschiedlichen Werkstoffe ermöglicht, da die einem Werkstoff zugeordnete elektromagnetische Strahlung vorwiegend oder ausschließlich auf diesen Werkstoff einwirkt.

Beim Verlöten von Bauteilen aus Keramikwerkstoff mit Bauteilen aus Metall kann beispielsweise Laserstrahlung einer ersten Wellenlänge und einer zweiten Wellenlänge verwendet werden, wobei die erste Wellenlänge von dem Keramikwerkstoff schwächer absorbiert wird als von dem Metall. Auf diese Weise ist die Absorption der Laserstrahlung der ersten Wellenlänge in dem Keramikwerkstoff verringert, so daß einerseits eine ausreichende Absorption durch das Metall und damit eine ausreichende Erwärmung des Metalles erzielt ist. Andererseits ist eine unerwünschte Absorption der Laserstrahlung dieser Wellenlänge durch den Keramikwerkstoff vermieden. Auf diese Weise ist die Gefahr einer Rißbildung aufgrund thermischer Spannungen wegen eines zu hohen Temperaturgradienten im Keramikwerkstoff und damit die Gefahr einer Beschädigung des Bauteiles zuverlässig vermieden.

Das erfindungsgemäße Verfahren ist einfach und schnell durchführbar und vielseitig anwendbar. Es ist insbesondere zum Fügen von Bauteilen bzw. Bauteilanordnungen aus unterschiedlichen Materialien geeignet, beispielsweise zum Löten, Schweißen oder Kleben.

Die Wellenlängen der elektromagnetischen Strahlung sind entsprechend den jeweiligen zu bearbeitenden Werkstoffen in weiten Grenzen wählbar. Die Strahlungsquellen zur Erzeugung der elektromagnetischen Strahlung sind ebenfalls entsprechend den jeweiligen Anforderungen und zu bearbeitenden Werkstoffen in weiten Grenzen wählbar. Es können sowohl Strahlungsquellen, deren elektromagnetische Strahlung eine einzige Wellenlänge aufweist, als auch Strahlungsquellen, deren elektromagnetische Strahlung mehrere Wellenlängen aufweist, verwendet werden. Die Wellenlängen können auch so gewählt werden, daß ein Werkstoff elektromagnetische Strahlung mehrerer Wellenlängen absorbiert.

Eine besonders vorteilhafte Weiterbildung der erfindungsgemäßen Lehre sieht vor, daß die erste und die zweite Wellenlänge so gewählt werden, daß die elektromagnetische Strahlung der zweiten Wellenlänge von dem ersten Werkstoff absorbiert wird, während die elektromagnetische Strahlung der ersten Wellenlänge von dem ersten Werkstoff im wesentlichen vollständig zu dem in Einstrahlrichtung hinter dem ersten Werkstoff angeordneten zweiten Werkstoff durchgelassen wird. Bei dieser Ausführungsform wird die elektromagnetische Strahlung der ersten Wellenlänge von dem ersten Werkstoff im wesentlichen nicht absorbiert, sondern im wesentlichen vollständig zu dem zweiten Werkstoff durchgelassen. Auf diese Weise ist eine unerwünschte Absorption der elektromagnetischen Strahlung der ersten Wellenlänge in dem ersten Werkstoff im wesentlichen vermieden. Die elektromagnetische Strahlung der ersten Wellenlänge wird vielmehr zu dem zweiten Werkstoff durchgelassen, in dem sie absorbiert wird und auf diesen Werkstoff in der gewünschten Weise einwirkt.

Grundsätzlich ist es möglich, daß die elektromagnetische Strahlung der ersten Wellenlänge und die elektromagnetische Strahlung der zweiten Wellenlänge durch dieselbe Strahlungsquelle erzeugt werden, beispielsweise durch eine Strahlungsquelle, die elektromagnetische Strahlung in einem Wellenlängenband erzeugt, das die erste Wellenlänge und die zweite Wellenlänge enthält. Eine vorteilhafte Ausführungsform sieht jedoch vor, daß die elektromagnetische Strahlung der ersten Wellenlänge und die elektromagnetische Strahlung der zweiten Wellenlänge durch unterschiedliche Strahlungsquellen erzeugt werden. Bei dieser Ausführungsform ist eine Anpassung der unterschiedlichen Strahlungsquellen an die unterschiedlichen Werkstoffe ermöglicht, beispielsweise kann die Intensität der elektromagnetischen Strahlung für die unterschiedlichen Werkstoffe getrennt voneinander gewählt werden. Ferner kann die Einwirkdauer der elektromagnetischen Strahlung oder die Art der Einwirkung, beispielsweise im Dauerbetrieb oder Impulsbetrieb, für die unterschiedlichen Werkstoffe getrennt voneinander gewählt werden.

Eine andere Weiterbildung sieht vor, daß die elektromagnetische Strahlung der ersten Wellenlänge und die elektromagnetische Strahlung der zweiten Wellenlänge durch Strahlungsquellen unterschiedlicher Strahlungsart erzeugt werden. Die elektromagnetische Strahlung der ersten Wellenlänge und die elektromagnetische Strahlung der zweiten Wellenlänge können jedoch auch durch Strahlungsquellen gleicher Strahlungsart erzeugt werden, wie dies eine andere Weiterbildung vorsieht. Bei den vorgenannten Ausführungsformen können als Strahlungsarten beispielsweise Laserstrahlung und/oder Infrarotstrahlung verwendet werden. Bei der Ausführungsform mit den Strahlungsquellen unterschiedlicher Strahlungsart kann beispielsweise wenigstens eine der Strahlungsquellen durch einen Laser und wenigstens eine andere Strahlungsquelle durch einen Infrarotstrahler gebildet sein. Bei der Ausführungsform mit den Strahlungsquellen gleicher Strahlungsart können beispielsweise als Strahlungsquellen ausschließlich Laser eingesetzt werden.

Form, Größe und Geometrie des zu bearbeitenden Bauteiles oder der Bauteilanordnung sind in weiten Grenzen wählbar. Eine Ausführungsform sieht vor, daß der zweite Werkstoff in Einstrahlrichtung der elektromagnetischen Strahlung unmittelbar auf den ersten Werkstoff folgt. Bei dieser Ausführungsform sind die beiden Werkstoffe benachbart zueinander angeordnet, so daß sie beispielsweise miteinander verschweißt werden können.

Eine andere Weiterbildung sieht vor, daß in Einstrahlrichtung zwischen dem ersten Werkstoff und dem zweiten Werkstoff wenigstens ein dritter Werkstoff angeordnet ist, der für die elektromagnetische Strahlung der ersten Wellenlänge im wesentlichen durchlässig ist. Bei dieser Ausführungsform wird die elektromagnetische Strahlung der ersten Wellenlänge von dem ersten Werkstoff zu dem dritten Werkstoff und von diesem zu dem zweiten Werkstoff durchgelassen, so daß sie im wesentlichen nur auf den zweiten Werkstoff einwirkt.

Der erste Werkstoff kann grundsätzlich unter der Oberfläche des Bauteiles angeordnet sein, sofern die Oberfläche des Bauteiles aus einem Werkstoff besteht, der für die elektromagnetische Strahlung der ersten und der zweiten Wellenlänge in ausreichendem Mäße durchlässig ist. Zweckmäßigerweise bildet der erste Werkstoff jedoch eine Oberfläche des Bauteiles bzw. der Bauteilanordnung. Bei dieser Ausführungsform trifft die elektromagnetische Strahlung unmittelbar auf den ersten Werkstoff auf, wobei die elektromagnetische Strählung der ersten Wellenlänge teilweise oder vollständig zu dem zweiten Werkstoff durchgelassen und die elektromagnetische Strahlung der zweiten Wellenlänge von dem ersten Werkstoff absorbiert wird.

Die Intensität der elektromagnetischen Strahlung ist entsprechend den jeweiligen Anforderungen, bei unterschiedlichen Strahlungsquellen auch für die Strahlung der unterschiedlichen Wellenlängen getrennt voneinander, wählbar. Eine besonders vorteilhafte Ausführungsform sieht vor, daß in Abhängigkeit von der Dicke des ersten bzw. des zweiten Werkstoffes in Einstrahlrichtung der elektromagnetischen Strahlung die Wellenlänge und Intensität der elektromagnetischen Strahlung derart gewählt wird, daß die elektromagnetische Strahlung der zweiten Wellenlänge von dem ersten Werkstoff und/oder die elektromagnetische Strahlung der ersten Wellenlänge von dem zweiten Werkstoff im wesentlichen vollständig absorbiert wird. Auf diese Weise wirkt beispielsweise die elektromagnetische Strahlung der zweiten Wellenlänge im wesentlichen ausschließlich auf den ersten Werkstoff, so daß ein unerwünschtes Einwirken auf den zweiten Werkstoff oder weitere Werkstoffe, die in Einstrahlrichtung hinter dem ersten Werkstoff angeordnet sind, vermieden ist.

Eine außerordentlich vorteilhafte Weiterbildung der erfindungsgemäßen Lehre besteht darin, daß der erste Werkstoff ein Keramikwerkstoff ist, daß der zweite Werkstoff ein Metall ist und daß der dritte Werkstoff ein Verbindungswerkstoff zum Verbinden des Keramikwerkstoffes mit dem Metall ist. Es hat sich gezeigt, daß die erfindungsgemäße Lehre für das Fügen von Bauteilen aus Keramikwerkstoff mit Bauteilen aus Metall außerordentlich gut geeignet ist.

Eine Weiterbildung der vorgenannten Ausführungsform sieht vor, daß der dritte Werkstoff ein Glaslot ist, das vorzugsweise zwischen dem Keramikwerkstoff und dem Metall angeordnet ist oder bei Erwärmung des Keramikwerkstoffes und/oder des Metalles in den Bereich zwischen dem Keramikwerkstoff und dem Metall eingebracht wird, insbesondere einfließt. Bei dieser Ausführungsform dient das erfindungsgemäße Verfahren zum Verlöten von Bauteilen aus Keramikwerkstoff mit Bauteilen aus Metall mittels eines Glaslotes. Durch das erfindungsgemäße Verfahren ist das Verlöten einfach und sicher gestaltet, ohne daß die Gefahr besteht, daß der Keramikwerkstoff beschädigt wird. Das erfindungsgemäße Verfahren stellt damit erstmals eine Möglichkeit zur Verfügung, Bauteile aus Keramikwerkstoff mit Bauteilen aus Metall einfach und schnell und im wesentlichen unabhängig von der Bauteilgeometrie miteinander zu verlöten.

Eine Weiterbildung der erfindungsgemäßen Lehre sieht vor, daß die elektromagnetische Strahlung der ersten Wellenlänge durch einen Nd:YAG-Laser oder einen Dioden-Laser oder einen Infrarotstrahler und die elektromagnetische Strahlung der zweiten Wellenlänge durch einen CO₂-Laser erzeugt wird. Diese Weiterbildung ist insbesondere bei den Ausführungsformen vorteilhaft, bei denen ein Bauteil aus Keramikwerkstoff mit einem Bauteil aus Metall verlötet wird, da entsprechende Keramikwerkstoffe für die Strahlung eines Nd:YAG-Lasers, eines Dioden-Lasers oder eines Infrarotstrahlers im wesentlichen durchlässig sind, während sie die Strahlung eines CO₂-Lasers absorbieren.

Eine andere Ausführungsform sieht vor, daß das Bauteil bzw. die Bauteilanordnung rotationssymmetrisch ausgebildet ist und daß in Radialrichtung von außen nach innen der erste Werkstoff und der zweite Werkstoff aufeinanderfolgen, wobei sich gegebenenfalls zwischen dem ersten Werkstoff und dem zweiten Werkstoff wenigstens ein weiterer Werkstoff, beispielsweise der dritte Werkstoff, befindet. Bei dieser Ausführungsform wird die elektromagnetische Strahlung der ersten Wellenlänge von der radial äußeren Schicht des Bauteiles zu einer radial inneren Schicht durchgelassen, während die Laserstrahlung der zweiten Wellenlänge von der radial äußeren Schicht des Bauteiles absorbiert wird. Auf diese Weise ist eine selektive Bearbeitung rotationssymmetrischer Bauteile ermöglicht.

Insbesondere beim Fügen von Bauteilen kann es ausreichend sein, wenn elektromagnetische Strahlung einer ersten Wellenlänge und einer zweiten Wellenlänge verwendet wird. Falls erforderlich, können jedoch auch mehr als zwei Wellenlängen verwendet wird. Dazu sieht eine Ausführungsform vor, daß elektromagnetische Strahlung mit drei oder mehr Wellenlängen verwendet wird und daß der elektromagnetischen Strahlung jeder Wellenlänge ein Werkstoff in dem Bauteil oder der Bauteilanordnung zugeordnet ist, der die elektromagnetische Strahlung dieser Wellenlänge stärker absorbiert als die elektromagnetische Strahlung der übrigen Wellenlängen, während die übrigen Werkstoffe die elektromagnetische Strahlung dieser Wellenlänge schwächer absorbieren als der dieser Wellenlänge zugeordnete Werkstoff. Bei dieser Ausführungsform ist auch bei aus drei oder mehr Werkstoffen bestehenden Bauteilen bzw. Bauteilanordnungen eine selektive Bearbeitung ermöglicht.

Eine besonders vorteilhafte Weiterbildung der vorgenannten Ausführungsform sieht vor, daß der der elektromagnetischen Strahlung einer Wellenlänge zugeordnete Werkstoff die elektromagnetische Strahlung dieser Wellenlänge absorbiert, während er für elektromagnetische Strahlung der übrigen Wellenlängen im wesentlichen durchlässig ist. Bei dieser Ausführungsform wirkt die einem Werkstoff zugeordnete elektromagnetische Strahlung einer Wellenlänge im wesentlichen ausschließlich auf diesen Werkstoff ein, so daß ein unerwünschtes Einwirken auf die übrigen Werkstoffe vermieden ist.

Eine andere Ausführungsform sieht vor, daß die elektromagnetische Strahlung der ersten Wellenlänge mit der elektromagnetischen Strahlung der zweiten Wellenlänge und/oder elektromagnetischen Strahlung einer weiteren Wellenlänge überlagert wird, derart, daß die elektromagnetische Strahlung unterschiedlicher Wellenlängen aus derselben Richtung auf das Bauteil bzw. die Bauteilanordnung gerichtet wird. Bei dieser Ausführungsform trifft die elektromagnetische Strahlung unterschiedlicher Wellenlängen in demselben Bereich auf das zu bearbeitende Bauteil bzw. die Bauteilanordnung auf.

Die elektromagnetische Strahlung unterschiedlicher Wellenlängen kann jedoch auch aus unterschiedlichen Richtungen auf das Bauteil gerichtet werden, wie dies eine andere Ausführungsform vorsieht.

Grundsätzlich ist es ausreichend, wenn die unterschiedlichen Wellenlängen durch eine gemeinsame Strahlungsquelle erzeugt werden oder für jede Wellenlänge eine separate Strahlungsquelle vorgesehen ist. Eine Weiterbildung sieht jedoch vor, daß für wenigstens einen Teil der unterschiedlichen Wellenlängen die elektromagnetische Strahlung durch mehr als eine Strahlungsquelle erzeugt wird oder die einfallende Strahlung in mehrere Teilstrahlen aufgespalten wird. Bei dieser Ausführungsform kann die elektromagnetische Strahlung einer Wellenlänge beispielsweise gleichzeitig aus mehreren Richtungen auf das zu bearbeitende Bauteil gerichtet werden.

Gemäß einer anderen Ausführungsform sind im Strahlungsweg der einfallenden elektromagnetischen Strahlung Strahlformungsmittel angeordnet. Dies ermöglicht eine Formung der einfallenden Strahlung, beispielsweise eine Fokussierung oder die Bildung eines Strahlflecks mit einer gewünschten Form auf dem Bauteil.

Das Bauteil bzw. die Bauteilanordnung und die Strahlungsquelle bzw. die Strahlungsquellen können sich während der Bearbeitung relativ zueinander in Ruhe befinden. Sie können jedoch auch während der Bearbeitung relativ zueinander bewegt werden, wie dies eine andere Ausführungsform vorsieht.

Das erfindungsgemäße Verfahren ist in vielfältiger Weise für die Bearbeitung von Bauteilen bzw. Bauteilanordnungen geeignet. Eine besonders vorteilhafte Ausführungsform sieht jedoch vor, daß die Bauteilanordnung ein erstes Bauteil, das aus dem ersten Werkstoff besteht, und ein zweites Bauteil, das aus dem zweiten Werkstoff besteht, aufweist und daß das erste Bauteil mit dem zweiten Bauteil gefügt wird. Für derartige Fügeverfahren ist das erfindungsgemäße Verfahren besonders gut geeignet.

Eine Weiterbildung der vorgenannten Ausführungsform sieht vor, daß das erste Bauteil und das zweite Bauteil in Einstrahlrichtung der elektromagnetischen Strahlung unmittelbar aufeinanderfolgen und daß das erste Bauteil mit dem zweiten Bauteil verschweißt oder verschmolzen wird. Die elektromagnetische Strahlung der zweiten Wellenlänge wirkt bei diesem Ausführungsbeispiel auf das erste Bauteil ein, während die elektromagnetische Strahlung der ersten Wellenlänge auf das zweite Bauteil einwirkt. Bei entsprechender Wahl von Intensität und Einwirkdauer der elektromagnetischen Strahlung sind auf diese Weise die Bauteile miteinander verschweißbar oder verschmelzbar.

Eine andere Ausführungsform sieht vor, daß sich in Einstrahlrichtung der elektromagnetischen Strahlung zwischen dem ersten Bauteil und dem zweiten Bauteil ein Lot befindet, mittels dessen das erste Bauteil mit dem zweiten Bauteil verlötet wird. Das Lot kann für die elektromagnetische Strahlung der ersten Wellenlänge im wesentlichen durchlässig sein, so daß die elektromagnetische Strahlung der zweiten Wellenlänge das erste Bauteil und die elektromagnetische Strahlung der ersten Wellenlänge das zweite Bauteil erwärmen, bis das Lot aufschmilzt und die Bauteile so miteinander verlötet werden.

Die Erfindung wird nachfolgend anhand der beigefügten Zeichnung näher erläutert.

Es zeigt:
- Fig. 1: eine schematische Darstellung einer aus drei Bauteilen aus unterschiedlichen Werkstoffen bestehenden Bauteilanordnung, die mittels des erfindungsgemäßen Verfahrens gefügt wird,
- Fig. 2: eine schematische Darstellung einer rotationssymmetrischen, aus drei unterschiedlichen Werkstoffen bestehenden Bauteilanordnung, die mittels des erfindungsgemäßen Verfahrens gefügt wird,
- Fig. 3: in schematischer Ansicht die Bauteilanordnung gemäß Fig. 2, wobei die elektromagnetische Strahlung der ersten Wellenlänge mit der elektromagnetischen Strahlung der zweiten Wellenlänge überlagert wird,
- Fig. 4: eine schematische Draufsicht auf eine Vorrichtung, bei der die elektromagnetische Strahlung der ersten und der zweiten Wellenlänge jeweils durch mehrere Strahlungsquellen erzeugt wird und
- Fig. 5: in gleicher Darstellung wie Fig. 1 eine Bauteilanordnung, die aus zwei aneinander angrenzenden Bauteilen besteht.

In den Figuren der Zeichnung sind gleiche bzw. sich entsprechende Elemente mit den gleichen Bezugszeichen versehen.

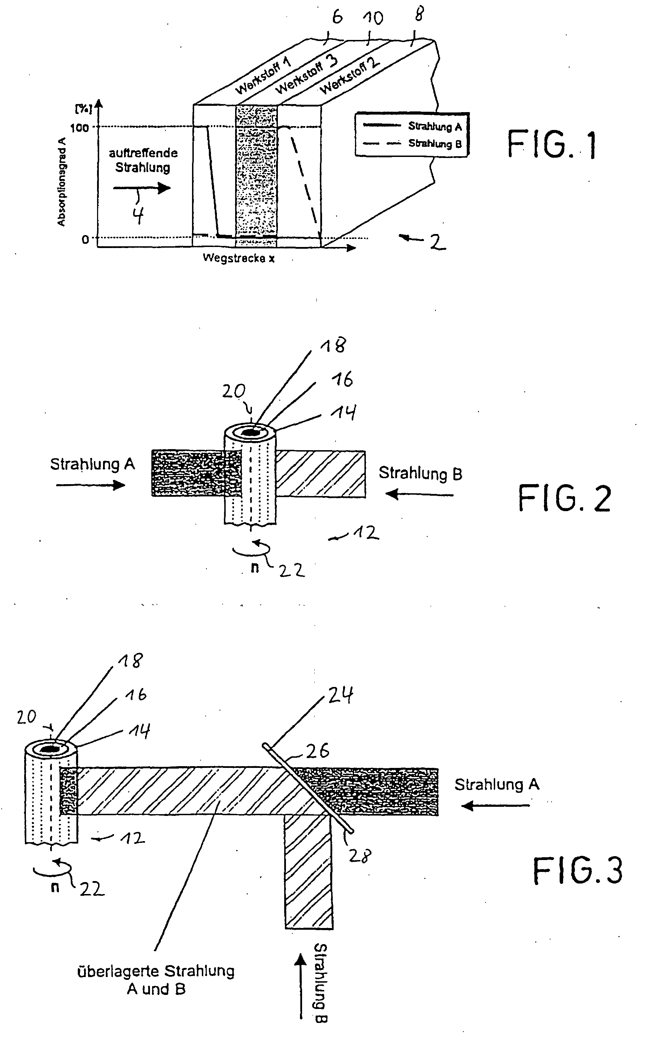

In Fig. 1 ist schematisch eine Bauteilanordnung dargestellt, die aus drei schichtförmig hintereinander angeordneten, in einer in Fig. 1 durch einen Pfeil 4 symbolisierten Einstrahlrichtung elektromagnetischer Strahlung aufeinanderfolgenden Bauteilen 6, 8, 10 besteht.

Ein erstes Bauteil 6 bildet eine Oberfläche der Bauteilanordnung 2 und besteht aus einem ersten Werkstoff, der bei diesem Ausführungsbeispiel durch einen Keramikwerkstoff gebildet ist. Ein zweites Bauteil 8 ist in Einstrahlrichtung der elektromagnetischen Strahlung hinter dem ersten Bauteil 6 angeordnet und besteht aus einem zweiten Werkstoff, der bei diesem Ausführungsbeispiel durch Metall gebildet ist. Zwischen dem ersten Bauteil 6 und dem zweiten Bauteil 8 befindet sich ein drittes Bauteil bzw. ein dritter Werkstoff, der bei diesem Ausführungsbeispiel durch ein Glaslot 10 gebildet ist. Die in der Einstrahlrichtung 4 einfallende elektromagnetische Strahlung ist bei diesem Ausführungsbeispiel durch Laserstrahlung einer ersten Wellenlänge und Laserstrahlung einer zweiten Wellenlänge gebildet, wobei die Laserstrahlung der ersten Wellenlänge durch einen Nd:YAG-Laser und die Laserstrahlung der zweiten Wellenlänge durch einen CO₂-Laser erzeugt wird. Die Laserstrahlung der ersten Wellenlänge wird mit der Laserstrahlung der zweiten Wellenlänge überlagert, so daß die Laserstrahlung der beiden Wellenlängen aus derselben Richtung auf die Bauteilanordnung 2 auftrifft. Der Keramikwerkstoff des ersten Bauteiles 6 sowie das Glaslot 10 sind für die Laserstrahlung des Nd:YAG-Lasers im wesentlichen durchlässig, während die Laserstrahlung des CO₂-Lasers von dem Keramikwerkstoff des ersten Bauteiles 6 absorbiert wird.

Zum Verlöten des ersten Bauteiles 6 mit dem zweiten Bauteil 8 mittels des Glaslotes 10 wird das erfindungsgemäße Verfahren wie folgt durchgeführt:

Die von dem Nd:YAG-Laser erzeugte Laserstrahlung der ersten Wellenlänge (in Fig. 1 als Strahlung B bezeichnet) wird mit der von dem CO₂-Laser erzeugten Läserstrahlung der zweiten Wellenlänge (in Fig. 1 als Strahlung A bezeichnet) durch nicht dargestellte Strahlführungsmittel überlagert und trifft auf die Bauteilanordnung 2 auf. Aufgrund der Durchlässigkeit des Keramikwerkstoffes des ersten Bauteiles 6 und des Glaslotes 10 für die Laserstrahlung der ersten Wellenlänge wird diese im wesentlichen vollständig zu dem zweiten Bauteil 8 aus Metall durchgelassen, von dem sie absorbiert wird.

Demgegenüber wird die von dem CO₂-Laser erzeugte Laserstrahlung der zweiten Wellenlänge von dem Keramikwerkstoff des ersten Bauteiles 6 absorbiert. Die Intensitäten der Laserstrahlung der ersten Wellenlänge und der zweiten Wellenlänge sind in Abhängigkeit von der Dicke in Einstrahlrichtung des ersten Bauteiles 6 und des zweiten Bauteiles 8 derart gewählt, daß die Laserstrahlung der zweiten Wellenlänge in dem ersten Bauteil 6 und die Laserstrahlung der ersten Wellenlänge in dem zweiten Bauteil 8 im wesentlichen vollständig absorbiert wird.

Die Absorption der Laserstrahlung der ersten Wellenlänge führt zu einer Erwärmung des zweiten Bauteiles 8 und die Absorption der Laserstrahlung der zweiten Wellenlänge zu einer Erwärmung des ersten Bauteiles 6, bis das Glaslot 10 schmilzt. Die Laserstrahlung kann dann abgeschaltet werden, so daß die Bauteilanordnung 2 abkühlt, wobei das abkühlende Glaslot 10 das erste Bauteil 6 mit dem zweiten Bauteil 8 verbindet, so daß das erste Bauteil 6 mit dem zweiten Bauteil 8 in der gewünschten Weise verlötet ist.

Durch das erfindungsgemäße Verfahren ist ein einfaches und schnelles Verlöten des ersten Bauteiles 6 mit dem zweiten Bauteil 8 ermöglicht, ohne daß hohe Temperaturgradienten auftreten, die zu thermischen Spannungen und damit zu einer Beschädigung der Bauteilanordnung 2, insbesondere des ersten Bauteiles 6 aus Keramikwerkstoff, führen könnten.

In Fig. 1 ist ein Koordinatensystem eingezeichnet, auf dessen x-Achse der Ausbreitungsweg der Laserstrahlung in der Bauteilanordnung 2 aufgetragen ist und auf dessen y-Achse der Absorptionsgrad der Laserstrahlung in Abhängigkeit vom Ausbreitungsweg aufgetragen ist. Es ist ersichtlich, daß die Laserstrahlung der zweiten Wellenlänge (Strahlung A) vollständig von dem ersten Bauteil absorbiert wird, wohingegen die Laserstrahlung der ersten Wellenlänge (Strahlung B) von dem ersten Bauteil 6 und dem Glaslot 10 vollständig zu dem zweiten Bauteil 8 durchgelassen wird, wo sie vollständig absorbiert wird.

In Fig. 2 ist eine rotationssymmetrische Bauteilanordnung 12 dargestellt, die eine radial äußere Schicht 14 aus Keramikwerkstoff aufweist, auf die in Radialrichtung von außen nach innen eine Schicht 16 aus Glaslot und ein Kern 18 aus Metall folgen. Die Laserstrahlung der ersten Wellenlänge wird entsprechend dem Ausführungsbeispiel gemäß Fig. 1 durch einen Nd:YAG-Laser und die Laserstrahlung der zweiten Wellenlänge durch einen CO₂-Laser erzeugt. Die Laserstrahlung der ersten Wellenlänge (Strahlung B) und die Laserstrahlung der zweiten Wellenlänge (Strahlung A) treffen an diametral gegenüberliegenden Stellen auf die Bauteil-anordnung 12 auf. Um eine in Umfangsrichtung gleichmäßige Bearbeitung der Bauteilanordnung 12 zu ermöglichen, ist die Bauteilanordnung 12 an einer in Fig. 2 nicht dargestellten Halterung aufgenommen und mittels eines ebenfalls nicht dargestellten Drehantriebes um eine in Fig. 2 durch eine gestrichelte Linie symbolisierte Drehachse 20 drehbar, wie dies in Fig. 2 durch einen Pfeil 22 angedeutet ist. Bei der Bearbeitung wird die Laserstrahlung der ersten Wellenlänge von der radial äußeren Schicht 14 und der Schicht 16 aus Glaslot zu dem radial inneren Kern 18 durchgelassen, wo sie vollständig absorbiert wird. Die Laserstrahlung der zweiten Wellenlänge wird demgegenüber von der radial äußeren Schicht 14 vollständig absorbiert. Auf diese Weise werden die radial äußere Schicht 14 und der radial innere Kern 18 erwärmt, bis das Glaslot 16 schmilzt, das nach Abschalten der Laserstrahlung erkaltet und die radial äußere Schicht 14 in der gewünschten Weise mit dem radial inneren Kern 18 verlötet.

Fig. 3 zeigt die Bauteilanordnung 12 gemäß Fig. 2, wobei die elektromagnetische Strahlung der ersten Wellenlänge (Strahlung B) mit der elektromagnetischen Strahlung der zweiten Wellenlänge (Strahlung A) überlagert wird. Hierzu sind Strahlführungsmittel in Form eines Spiegels 24 vorgesehen. Der Spiegel 24 ist im Ausbreitungsweg der Laserstrahlung der zweiten Wellenlänge angeordnet und für die Laserstrahlung dieser Wellenlänge im wesentlichen durchlässig, so daß die auf eine Rückseite 26 des Spiegels 24 gerichtete Laserstrahlung der zweiten Wellenlänge im wesentlichen zu der Bauteilanordnung 12 durchgelassen wird.

Demgegenüber reflektiert der Spiegel 24 die elektromagnetische Strahlung der ersten Wellenlänge im wesentlichen vollständig, so daß die auf eine Vorderseite 28 des Spiegels 24 gerichtete Laserstrahlung der ersten Wellenlänge auf die Bauteilanordnung 12 reflektiert wird, wobei die Laserstrahlung der ersten Wellenlänge mit der Laserstrahlung der zweiten Wellenlänge überlagert wird.

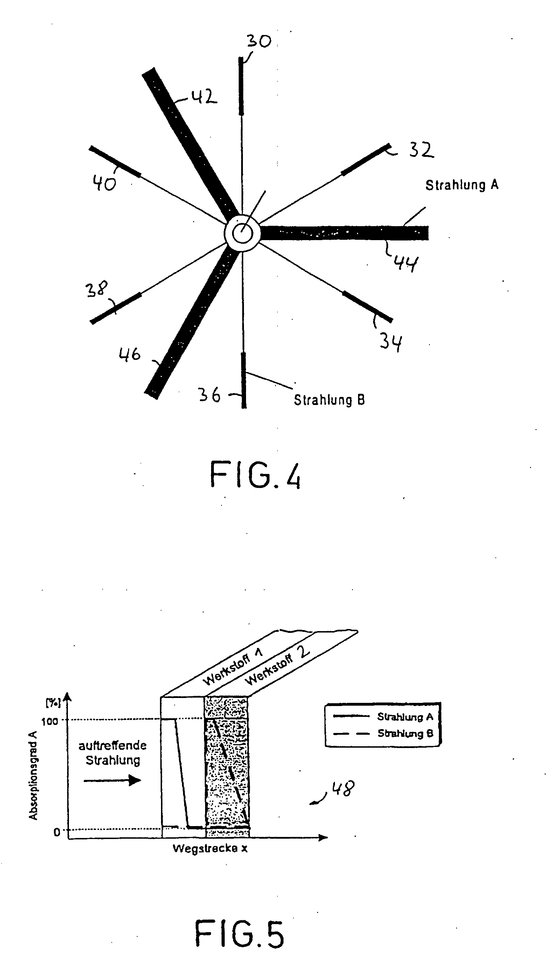

Fig. 4 zeigt schematisch eine Anordnung, bei der die Laserstrahlung der ersten Wellenlänge (Strahlung B) von sechs in Umfangsrichtung der Bauteilanordnung 12 zueinander gleich beabstandeten Nd:YAG-Lasern 30 bis 40 erzeugt wird, während die elektromagnetische Strahlung der zweiten Wellenlänge (Strahlung A) von drei in Umfangsrichtung der Bauteilanordnung 12 zueinander gleich beabstandeten CO₂-Lasern 42, 44, 46 erzeugt wird.

In Fig. 5 ist eine weitere Bauteilanordnung 48 dargestellt, die sich von der Bauteilanordnung gemäß Fig. 1 dadurch unterscheidet, daß das erste Bauteil 6 und das zweite Bauteil 8 in Einstrahlrichtung 4 der Laserstrahlung unmittelbar aufeinanderfolgen. In zu Fig. 1 entsprechender Weise wird die Laserstrahlung der ersten Wellenlänge (Strahlung B) von dem ersten Bauteil 6 zu dem zweiten Bauteil 8 durchgelassen, wo sie vollständig absorbiert wird, während die Laserstrahlung der zweiten Wellenlänge (Strahlung A) von dem ersten Bauteil 6 vollständig absorbiert wird. Auf diese Weise werden das erste Bauteil 6 und das zweite Bauteil 8 erwärmt und können beispielsweise miteinander verschweißt oder verschmolzen werden.

Zur Erzeugung von elektromagnetischer Strahlung der ersten Wellenlänge kann anstelle des Nd:YAG-Lasers ein Infrarotstrahler verwendet werden, der kostengünstiger als ein Nd:YAG-Laser ist.

## Patentansprüche

1. Verfahren zum Bearbeiten eines Bauteiles oder einer Bauteilanordnung mittels elektromagnetischer Strahlung, wobei das Bauteil oder die Bauteilanordnung aus wenigstens zwei in Einstrahlrichtung der elektromagnetischen Strahlung hintereinander angeordneten Werkstoffen besteht,
wobei elektromagnetische Strahlung einer ersten Wellenlänge und Laserstrahlung wenigstens einer zweiten Wellenlänge auf das Bauteil bzw. die Bauteilanordnung gerichtet wird und
wobei die erste und die zweite Wellenlänge der elektromagnetischen Strahlung derart gewählt werden, daß die elektromagnetische Strahlung der ersten Wellenlänge von einem ersten Werkstoff des Bauteiles bzw. der Bauteilanordnung schwächer absorbiert wird als von einem in Einstrahlrichtung der elektromagnetischen Strahlung hinter dem ersten Werkstoff angeordneten zweiten Werkstoff, während die elektromagnetische Strahlung der zweiten Wellenlänge von dem ersten Werkstoff stärker absorbiert wird als von dem zweiten Werkstoff, **dadurch gekennzeichnet, dass** die erste und die zweite Wellenlänge so gewählt werden, daß die elektromagnetische Strahlung der zweiten Wellenlänge von dem ersten Werkstoff absorbiert wird, während die elektromagnetische Strahlung der ersten Wellenlänge von dem ersten Werkstoff im wesentlichen vollständig zu dem in Einstrahlrichtung hinter dem ersten Werkstoff angeordneten zweiten Werkstoff durchgelassen wird.

2. Verfahren nach Anspruch 1, **dadurch gekennzeichnet, daß** die elektromagnetische Strahlung der ersten Wellenlänge und die elektromagnetische Strahlung der zweiten Wellenlänge durch unterschiedliche Strahlungsquellen erzeugt werden.

3. Verfahren nach Anspruch 2, **dadurch gekennzeichnet, daß** die elektromagnetische Strahlung der ersten Wellenlänge und die elektromagnetische Strahlung der zweiten Wellenlänge durch Strahlungsquellen unterschiedlicher Strahlungsart erzeugt werden.

4. Verfahren nach Anspruch 1, oder 2, **dadurch gekennzeichnet, daß** die elektromagnetische Strahlung der ersten Wellenlänge und die elektromagnetische Strahlung der zweiten Wellenlänge durch Strahlungsquellen gleicher Strahlungsart erzeugt werden.

5. Verfahren nach Anspruch 3 oder 4, **dadurch gekennzeichnet, daß** als Strahlungsarten Laserstrahlung und/oder Infrarotstrahlung verwendet werden.

6. Verfahren nach einem der vorhergehenden Ansprüche, **dadurch gekennzeichnet, daß** der zweite Werkstoff in Einstrahlrichtung der elektromagnetischen Strahlung unmittelbar auf den ersten Werkstoff folgt.

7. Verfahren nach einem der Ansprüche 1 bis 5, **dadurch gekennzeichnet, daß** in Einstrahlrichtung zwischen dem ersten Werkstoff und dem zweiten Werkstoff wenigstens ein dritter Werkstoff angeordnet ist, der für die elektromagnetische Strahlung der ersten Wellenlänge im wesentlichen durchlässig ist.

8. Verfahren nach einem der vorhergehenden Ansprüche, **dadurch gekennzeichnet, daß** der erste Werkstoff eine Oberfläche des Bauteiles bzw. der Bauteilanordnung bildet.

9. Verfahren nach einem der vorhergehenden Ansprüche, **dadurch gekennzeichnet, daß** in Abhängigkeit von der Dicke des ersten bzw. zweiten Werkstoffes in Einstrahlrichtung der elektromagnetischen Strahlung die Wellenlänge und Intensität der elektromagnetischen Strahlung derart gewählt wird, daß die elektromagnetische Strahlung der zweiten Wellenlänge von dem ersten Werkstoff und/oder die elektromagnetische Strahlung der ersten Wellenlänge von dem zweiten Werkstoff im wesentlichen vollständig absorbiert wird.

10. Verfahren nach einem der vorhergehenden Ansprüche, **dadurch gekennzeichnet, daß** der erste Werkstoff ein Keramikwerkstoff ist, daß der zweite Werkstoff ein Metall ist und daß der dritte Werkstoff ein Verbindungswerkstoff zum Verbinden des Keramikwerkstoffes mit dem Metall ist.

11. Verfahren nach Anspruch 10, **dadurch gekennzeichnet, daß** der dritte Werkstoff ein Glaslot ist, das vorzugsweise zwischen dem Keramikwerkstoff und dem Metall angeordnet ist oder bei Erwärmung des Keramikwerkstoffes und/oder des Metalles in dem Bereich zwischen dem Keramikwerkstoff und dem Metall eingebracht wird, insbesondere einfließt.

12. Verfahren nach einem der vorhergehenden Ansprüche, **dadurch gekennzeichnet, daß** die elektromagnetische Strahlung der ersten Wellenlänge durch einen Nd:YAG-Laser oder einen Dioden-Laser oder einen Infrarotstrahler und die elektromagnetische Strahlung der zweiten Wellenlänge durch einen CO₂-Laser erzeugt wird.

13. Verfahren nach einem der vorhergehenden Ansprüche, **dadurch gekennzeichnet, daß** das Bauteil bzw. die Bauteilanordnung rotationssymmetrisch ausgebildet ist und daß in Radialrichtung von außen nach innen der erste Werkstoff und der zweite Werkstoff aufeinander folgen, wobei sich ggf. zwischen dem ersten Werkstoff und dem zweiten Werkstoff wenigstens ein weiterer Werkstoff, beispielsweise der dritte Werkstoff, befindet.

14. Verfahren nach einem der vorhergehenden Ansprüche, **dadurch gekennzeichnet, daß** elektromagnetische Strahlung mit drei oder mehr Wellenlängen verwendet wird und daß der elektromagnetischen Strahlung jeder Wellenlänge ein Werkstoff in dem Bauteil oder der Bauteilanordnung zugeordnet ist, der die elektromagnetische Strahlung dieser Wellenlänge stärker absorbiert als die elektromagnetische Strahlung der übrigen Wellenlängen, während die übrigen Werkstoffe die elektromagnetische Strahlung dieser Wellenlänge schwächer absorbieren als der dieser Wellenlänge zugeordnete Werkstoff.

15. Verfahren nach Anspruch 14, **dadurch gekennzeichnet, daß** der der elektromagnetischen Strahlung einer Wellenlänge zugeordnete Werkstoff die elektromagnetische Strahlung dieser Wellenlänge absorbiert, während er für elektromagnetische Strahlung der übrigen Wellenlängen im wesentlichen durchlässig ist.

16. Verfahren nach einem der vorhergehenden Ansprüche, **dadurch gekennzeichnet, daß** die elektromagnetische Strahlung der ersten Wellenlänge mit der elektromagnetischen Strahlung der zweiten Wellenlänge und/oder elektromagnetischer Strahlung einer weiteren Wellenlänge überlagert wird, derart, daß die elektromagnetische Strahlung der unterschiedlichen Wellenlängen aus derselben Richtung auf das Bauteil bzw. die Bauteilanordnung gerichtet wird.

17. Verfahren nach einem der Ansprüche 1 bis 15, **dadurch gekennzeichnet, daß** die elektromagnetische Strahlung unterschiedlicher Wellenlängen aus unterschiedlichen Richtungen auf das Bauteil gerichtet wird.

18. Verfahren nach einem der vorhergehenden Ansprüche, **dadurch gekennzeichnet, daß** für wenigstens einen Teil der unterschiedlichen Wellenlängen die elektromagnetische Strahlung durch mehr als eine Strahlungsquelle erzeugt wird oder die einfallende Strahlung in mehrere Teilstrahlen aufgespalten wird.

19. Verfahren nach einem der vorhergehenden Ansprüche, **dadurch gekennzeichnet, daß** im Strahlungsweg der einfallenden elektromagnetischen Strahlung Strahlformungsmittel angeordnet sind.

20. Verfahren nach einem der vorhergehenden Ansprüche, **dadurch gekennzeichnet, daß** das Bauteil bzw. die. Bauteilanordnung und die Strahlungsquelle bzw. die Strahlungsquellen während der Bearbeitung relativ zueinander bewegt werden.

21. Verfahren nach einem der vorhergehenden Ansprüche, **dadurch gekennzeichnet, daß** die Bauteilanordnung ein erstes Bauteil, das aus dem ersten Werkstoff besteht und ein zweites Bauteil, das aus.dem zweiten Werkstoff besteht, aufweist und daß das erste Bauteil mit dem zweiten Bauteil gefügt wird.

22. Verfahren nach Anspruch 21, **dadurch gekennzeichnet, daß** erste Bauteil und das zweite Bauteil in Einstrahlrichtung der elektromagnetischen Strahlung unmittelbar aufeinanderfolgen und daß das erste Bauteil mit dem zweiten Bauteil verschweißt und verschmolzen wird.

23. Verfahren nach Anspruch 21, **dadurch gekennzeichnet, daß** sich in Einstrahlrichtung der elektromagnetischen Strahlung zwischen dem ersten Bauteil und dem zweiten Bauteil ein Lot befindet, mittels dessen das erste Bauteil mit dem zweiten Bauteil verlötet wird.

## Claims

1. Process for treating a component or a component arrangement by means of electromagnetic radiation, in which the component or component arrangement comprises at least two materials arranged behind one another in the direction of incidence of the electromagnetic radiation,
electromagnetic radiation of a first wavelength and laser radiation of at least a second wavelength being directed onto the component or component arrangement, and
the first and second wavelengths of the electromagnetic radiation being selected in such a manner that the electromagnetic radiation of the first wavelength is less strongly absorbed by a first material of the component or component arrangement than by a second material, which is arranged behind the first material in the direction of incidence of the electromagnetic radiation, while the electromagnetic radiation of the second wavelength is absorbed more strongly by the first material than by the second material, **characterized in that** the first and second wavelengths are selected in such a way that the electromagnetic radiation of the second wavelength is absorbed by the first material, while the electromagnetic radiation of the first wavelength is substantially completely transmitted by the first material to the second material, which is arranged behind the first material in the direction of incidence.

2. Process according to Claim 1, **characterized in that** the electromagnetic radiation of the first wavelength and the electromagnetic radiation of the second wavelength are generated by different radiation sources.

3. Process according to Claim 2, **characterized in that** the electromagnetic radiation of the first wavelength and the electromagnetic radiation of the second wavelength are generated by radiation sources of a different radiation type.

4. Process according to Claim 1 or 2, **characterized in that** the electromagnetic radiation of the first wavelength and the electromagnetic radiation of the second wavelength are generated by radiation sources of the same radiation type.

5. Process according to Claim 3 or 4, **characterized in that** the types of radiation used are laser radiation and/or infrared radiation.

6. Process according to one of the preceding claims, **characterized in that** the second material directly follows the first material in the direction of incidence of the electromagnetic radiation.

7. Process according to one of Claims 1 to 5, **characterized in that** at least a third material, which substantially transmits the electromagnetic radiation of the first wavelength, is arranged between the first material and the second material in the direction of incidence.

8. Process according to one of the preceding claims, **characterized in that** the first material forms a surface of the component or component arrangement.

9. Process according to one of the preceding claims, **characterized in that** the wavelength and intensity of the electromagnetic radiation are selected as a function of the thickness of the first and second materials in the direction of incidence of the electromagnetic radiation, in such a manner that the electromagnetic radiation of the second wavelength is substantially completely absorbed by the first material and/or the electromagnetic radiation of the first wavelength is substantially completely adsorbed by the second material.

10. Process according to one of the preceding claims, **characterized in that** the first material is a ceramic material, **in that** the second material is a metal and **in that** the third material is a connecting material for connecting the ceramic material to the metal.

11. Process according to Claim 10, **characterized in that** the third material is a soldering glass which is preferably arranged between the ceramic material and the metal or is introduced, in particular flows, into the region between the ceramic material and the metal when the ceramic material and/or the metal is/are heated.

12. Process according to one of the preceding claims, **characterized in that** the electromagnetic radiation of the first wavelength is generated by an Nd:YAG laser or a diode laser or an infrared radiator and the electromagnetic radiation of the second wavelength is generated by the a CO₂ laser.

13. Process according to one of the preceding claims, **characterized in that** the component or component arrangement is of rotationally symmetrical design, and **in that** the first material and the second material follow one another from the outside inwards in the radial direction, at least one further material, for example the third material, being located between the first material and the second material if appropriate.

14. Process according to one of the preceding claims, **characterized in that** electromagnetic radiation with three or more wavelengths is used, and **in that** the electromagnetic radiation of each wavelength is assigned a material in the component or component arrangement which absorbs the electromagnetic radiation of this wavelength more strongly than the electromagnetic radiation of the other wavelengths, while the other materials absorb the electromagnetic radiation of this wavelength less strongly than the material assigned to this wavelength.

15. Process according to Claim 14, **characterized in that** the material assigned to the electromagnetic radiation of a wavelength absorbs the electromagnetic radiation of this wavelength while substantially transmitting electromagnetic radiation of the other wavelengths.

16. Process according to one of the preceding claims, **characterized in that** the electromagnetic radiation of the first wavelength is superimposed with the electromagnetic radiation of the second wavelength and/or electromagnetic radiation of a further wavelength, in such a manner that the electromagnetic radiation of the different wavelengths is directed onto the component or component arrangement from the same direction.

17. Process according to one of Claims 1 to 15, **characterized in that** the electromagnetic radiation of different wavelengths is directed onto the component from different directions.

18. Process according to one of the preceding claims, **characterized in that** for at least some of the different wavelengths the electromagnetic radiation is generated by more than one radiation source or the incoming radiation is split into a plurality of partial beams.

19. Process according to one of the preceding claims, **characterized in that** beam-shaping means are arranged in the radiation path of the incoming electromagnetic radiation.

20. Process according to one of the preceding claims, **characterized in that** the component or component arrangement and the radiation source or radiation sources are moved relative to one another during the treatment.

21. Process according to one of the preceding claims, **characterized in that** the component arrangement includes a first component, which consists of the first material, and a second component, which consists of the second material, and **in that** the first component is joined to the second component.

22. Process according to Claim 21, **characterized in that** the first component and the second component directly follow one another in the direction of incidence of the electromagnetic radiation, and **in that** the first component is welded and fused to the second component.

23. Process according to Claim 21, **characterized in that** a solder, by means of which the first component is soldered to the second component, is located between the first component and the second component in the direction of incidence of the electromagnetic radiation.

## Revendications

1. Procédé d'usinage d'un élément ou d'une structure à l'aide d'un rayonnement électromagnétique, l'élément ou la structure étant constitué d'au moins deux matériaux disposés l'un derrière l'autre dans la direction d'incidence du rayonnement électromagnétique,
dans lequel on dirige du rayonnement électromagnétique d'une première longueur d'onde et du rayonnement laser d'au moins une deuxième longueur d'onde sur l'élément ou sur la structure, et
dans lequel on choisit la première et la deuxième longueur d'onde du rayonnement électromagnétique de façon à ce que le rayonnement électromagnétique de la première longueur d'onde soit absorbé plus faiblement par un premier matériau de l'élément ou de la structure que par un deuxième matériau disposé derrière le premier matériau dans le sens d'incidence du rayonnement électromagnétique, tandis que le rayonnement électromagnétique de la deuxième longueur d'onde est absorbé plus fortement par le premier matériau que par le deuxième matériau, **caractérisé en ce que** l'on choisit la première et la deuxième longueur d'onde de façon à ce que le rayonnement électromagnétique de la deuxième longueur d'onde soit absorbé par le premier matériau, tandis que le rayonnement électromagnétique de la première longueur d'onde passe sensiblement complètement à travers le premier matériau vers le deuxième matériau disposé derrière le premier matériau dans le sens d'incidence.

2. Procédé suivant la revendication 1, **caractérisé en ce que** l'on produit le rayonnement électromagnétique de la première longueur d'onde et le rayonnement électromagnétique de la deuxième longueur d'onde par des sources de rayonnement qui sont différentes.

3. Procédé suivant la revendication 2, **caractérisé en ce que** l'on produit le rayonnement électromagnétique de la première longueur d'onde et le rayonnement électromagnétique de la deuxième longueur d'onde par des sources de rayonnement de types de rayonnements qui sont différents.

4. Procédé suivant la revendication 1 ou 2, **caractérisé en ce que** l'on produit le rayonnement électromagnétique de la première longueur d'onde et le rayonnement électromagnétique de la deuxième longueur d'onde par des sources de rayonnement de même type de rayonnement.

5. Procédé suivant la revendication 3 ou 4, **caractérisé en ce que** l'on utilise comme type de rayonnement du rayonnement laser et/ou de rayonnement infrarouge.

6. Procédé suivant l'une des revendications précédentes, **caractérisé en ce que** le deuxième matériau suit directement le premier matériau dans le sens d'incidence du rayonnement électromagnétique.

7. Procédé suivant l'une des revendications 1 à 5, **caractérisé en ce que** l'on interpose, dans le sens d'incidence, entre le premier matériau et le deuxième matériau, au moins un troisième matériau qui est sensiblement transparent au rayonnement électromagnétique de la première longueur d'onde.

8. Procédé suivant l'une des revendications précédentes, **caractérisé en ce que** le premier matériau forme une surface de l'élément ou de la structure.

9. Procédé suivant l'une des revendications précédentes, **caractérisé en ce que** l'on choisit la longueur d'onde et l'intensité du rayonnement électromagnétique en fonction de l'épaisseur du premier ou du deuxième matériau dans la direction d'incidence du rayonnement électromagnétique de façon à ce que le rayonnement électromagnétique de la deuxième longueur d'onde soit absorbé par le premier matériau et/ou de façon à ce que le rayonnement électromagnétique de la première longueur d'onde soit absorbé sensiblement complètement par le deuxième matériau.

10. Procédé suivant l'une des revendications précédentes, **caractérisé en ce que** le premier matériau est un matériau en céramique, **en ce que** le deuxième matériau est un métal et **en ce que** le troisième matériau est un matériau de liaison pour lier le matériau en céramique au métal.

11. Procédé suivant la revendication 10, **caractérisé en ce que** le troisième matériau est une brasure pour du verre qui est disposé de préférence entre le matériau en céramique et le métal ou qui, lorsque le matériau en céramique et/ou le métal est réchauffé, est introduit entre la partie comprise entre le matériau en céramique et le métal, notamment en s'y écoulant.

12. Procédé suivant l'une des revendications précédentes, **caractérisé en ce que** l'on produit le rayonnement électromagnétique de la première longueur d'onde par un laser à Nd:YAG ou par un laser à diode ou par une source de rayonnement infrarouge et le rayonnement électromagnétique de la deuxième longueur d'onde par un laser à CO₂.

13. Procédé suivant l'une des revendications précédentes, **caractérisé en ce que** l'élément ou la structure est de révolution et **en ce que** le premier matériau et le deuxième matériau se suivent dans la direction radiale de l'extérieur à l'intérieur, au moins un autre matériau, par exemple un troisième matériau, se trouvant le cas échéant entre le premier matériau et le deuxième matériau.

14. Procédé suivant l'une des revendications précédentes, **caractérisé en ce qu'**on utilise le rayonnement électromagnétique ayant trois longueurs d'onde ou plus de trois longueurs d'onde et **en ce que** l'on associe au rayonnement électromagnétique de chaque longueur d'onde un matériau de l'élément ou de la structure qui absorbe plus fortement le rayonnement électromagnétique de cette longueur d'onde que le rayonnement électromagnétique des autres longueurs d'onde, tandis que les autres matériaux absorbent plus faiblement le rayonnement électromagnétique de cette longueur d'onde que le matériau associé à cette longueur d'onde.

15. Procédé suivant la revendication 14, **caractérisé en ce que** le matériau associé au rayonnement électromagnétique d'une longueur d'onde absorbe le rayonnement électromagnétique de cette longueur d'onde, tandis qu'il est sensiblement transparent au rayonnement électromagnétique des autres longueurs d'onde.

16. Procédé suivant l'une des revendications précédentes, **caractérisé en ce que** l'on superpose le rayonnement électromagnétique de la première longueur d'onde au rayonnement électromagnétique de la deuxième longueur d'onde et/ou à un rayonnement électromagnétique d'une autre longueur d'onde, de façon à ce que le rayonnement électromagnétique des longueurs d'onde différentes soit dirigé à partir de la même direction sur l'élément ou sur la structure.

17. Procédé suivant l'une des revendications 1 à 15, **caractérisé en ce que** l'on dirige le rayonnement électromagnétique de longueurs d'onde différentes à partir de directions différentes sur l'élément.

18. Procédé suivant l'une des revendications précédentes, **caractérisé en ce que**, pour au moins une partie des longueurs d'onde qui sont différentes, on produit le rayonnement électromagnétique par plus d'une source de rayonnement ou l'on subdivise le rayonnement incident en plusieurs sous-faisceaux.

19. Procédé suivant l'une des revendications précédentes, **caractérisé en ce que** l'on met des moyens de formation du faisceau dans le trajet du rayonnement électromagnétique incident.

20. Procédé suivant l'une des revendications précédentes, **caractérisé en ce que** l'on déplace, relativement l'un à l'autre, l'élément ou la structure et la source de rayonnement ou les sources de rayonnement pendant l'usinage.

21. Procédé suivant l'une des revendications précédentes, **caractérisé en ce que** la structure comporte un premier élément qui est en le premier matériau, un deuxième élément qui est en le deuxième matériau et **en ce que** le premier élément est joint au deuxième élément.

22. Procédé suivant la revendication 21, **caractérisé en ce que** l'on fait se suivre directement le premier élément et le deuxième élément dans la direction d'incidence du rayonnement électromagnétique et **en ce que** l'on soude et fond le premier élément au deuxième élément.

23. Procédé suivant la revendication 21, **caractérisé en ce qu'**il se trouve dans la direction d'incidence du rayonnement électromagnétique entre le premier élément et le deuxième élément une brasure au moyen de laquelle le premier élément est brasé au deuxième élément.
